Europäisches Patentamt

European Patent Office

Office européen des brevets

(11) Veröffentlichungsnummer: **0 208 078**

A1

(12) ## EUROPÄISCHE PATENTANMELDUNG

(21) Anmeldenummer: 86106038.2

(22) Anmeldetag: 02.05.86

(51) Int. Cl.⁴: **G 02 F 1/133**
G 09 F 9/35

(30) Priorität: 05.07.85 DE 3524085

(43) Veröffentlichungstag der Anmeldung:
14.01.87 Patentblatt 87/3

(84) Benannte Vertragsstaaten:
DE FR GB IT SE

(71) Anmelder: VDO Adolf Schindling AG
Gräfstrasse 103
D-6000 Frankfurt/Main(DE)

(72) Erfinder: Fertig, Werner, Dr.
Paul-Wagner-Strasse 66
D-6100 Darmstadt(DE)

(72) Erfinder: Schurig, Dieter
Karlstrasse 6
D-6274 Wallrabenstein(DE)

(74) Vertreter: Klein, Thomas, Dipl.-Ing. (FH)
Sodener Strasse 9 Postfach 6140
D-6231 Schwalbach a. Ts.(DE)

(54) Flüssigkristallzelle.

(57) Bei einer Flüssigkristallzelle mit zwei im Abstand zueinander angeordneten Substraten (1, 2), die zwischen sich einen mit Flüssigkristallsubstanz gefüllten Zellenraum bilden, sind die auf mindestens einem Substrat (1) aufgebrachten Leitungen (3, 4) und Elektroden (10) als übereinanderliegende, voneinander isolierte Schichten aufgebracht, wobei die Leitungen (10) durchsichtig sind. Dadurch wird gegenüber den bekannten Flüssigkristallzellen, bei denen Leitungen und Elektroden nebeneinander angeordnet sind, eine wesentlich bessere Ausnutzung der Fläche der Flüssigkristallzelle erzielt.

Fig. 1

EP 0 208 078 A1

0208078

- 1 -

VDO Adolf Schindling AG    Gräfstraße 103
6000 Frankfurt/Main 90
G-R G 1062 / 1839
19. Juni 1985

Flüssigkristallzelle

Die Erfindung betrifft eine Flüssigkristallzelle mit
zwei im Abstand zueinander angeordneten Substraten,
die zwischen sich einen mit Flüssigkristallsubstanz
gefüllten Zellenraum bilden, mit zellenraumseitig
auf mindestens einem Substrat aufgebrachten Leitungen, Elektroden und anderen Elementen.

Bei derartigen Flüssigkristallzellen werden die
einzelnen Bildelektroden nach einem Multiplex-Verfahren angesteuert. Hierzu sind sich kreuzende Leitungen erforderlich, welche derart mit Impulsen
beaufschlagt werden, daß nacheinander die den einzelnen Kreuzungspunkten zugeordneten Bildelemente angesprochen werden. Dabei wird das einen Kondensator
bildende Elektrodenpaar eines Bildelementes je nach
darzustellender Information aufgeladen oder nicht
aufgeladen. Damit die Ladung des Bildelementes bis
zum nächsten Ansprechzeitpunkt erhalten bleibt, ist
mindestens eine der dem Bildelement zugeordneten
Elektroden über ein Schaltelement mit der zugehöri-

...

0208078

gen Leitung verbunden.

Bei bekannten Flüssigkristallzellen werden als
Schaltelemente Feldeffekttransistoren oder Metall-
Isolator-Metall-Elemente (MIM-Elemente) verwendet.
Die bekannten Flüssigkristallzellen weisen jedoch
den Nachteil auf, daß von der zur Verfügung stehenden Fläche ein großer Teil für die Leiterbahnen verlorengeht. So steht bei einer bekannten Flüssigkristallzelle nur 64 % der Gesamtfläche für Bildelemente zur Verfügung. Darunter leidet die Erkennbarkeit der mit Hilfe der Flüssigkristallzellen
darzustellenden Zeichen. Da ferner die Leiterbahnen
nicht beliebig schmal ausgelegt werden können, sind
der Bildauflösung, insbesondere bei bekannten Flüssigkristallzellen mit geringen Abmessungen, Grenzen
gesetzt.

Aufgabe der vorliegenden Erfindung ist es, eine
Flüssigkristallzelle anzugeben, welche die Nachteile
der bekannten Flüssigkristallzellen vermeidet.

Diese Aufgabe wird erfindungsgemäß dadurch gelöst,
daß die Leitungen und die Elektroden als übereinanderliegende, voneinander isolierte Schichten aufgebracht sind.

Durch diese Ausbildung kann ein wesentlich größerer
Teil der Fläche als bei den bekannten Flüssigkristallzellen für die Bildelemente genutzt werden. Bei
einer Weiterbildung der Erfindung ist zwischen den
Elektroden und den Leitungen eine leitende Abschirmschicht und eine weitere Isolierschicht angeordnet.
Hierdurch werden Störungen durch die impulsförmigen
Ansteuersignale auf den Leitungen ausgeschlossen.

...

0208078

Bei einer zweiten Weiterbildung, bei welcher zur Verbindung der Leitungen mit den Elektroden Metall-Isolator-Metall-Elemente (MIM-Elemente) vorgesehen sind, sind auf beiden Substraten nebeneinanderliegende Leitungen, darüber eine Isolierschicht und darüber Elektroden aufgebracht. Ferner sind bei dieser Weiterbildung der Erfindung die MIM-Elemente in Aussparungen der Elektroden und der Leitungen angeordnet, wobei die Leitungen auf dem einen Substrat senkrecht zu den Leitungen auf dem anderen Substrat verlaufen. Bei einer anderen Weiterbildung der Erfindung werden die Leitungen mit den Elektroden mit Hilfe von Transistoren verbunden, wobei auf einem Substrat übereinanderliegend zwei sich kreuzende Gruppen von untereinander paralleler Leitungen und Elektroden vorgesehen sind. Dabei ist jeweils die erste Gruppe der Leitungen von der zweiten Gruppe und von den Elektroden durch Isolierschichten getrennt, während auf dem anderen Substrat eine gemeinsame Elektrode aufgebracht ist.

Schließlich ist bei einer besonderen Ausgestaltung der letztgenannten Weiterbildung für die Leitungen eine kleinere Fläche als für die Bildelemente vorgesehen, so daß jedes der Bildelemente nur teilweise von zwei Leitungen überdeckt ist. Hierdurch wird die an sich schon geringe Kontrastverminderung durch die durchsichtigen Leitungen abermals verringert.

Ausführungsbeispiele der Erfindung sind in der Zeichnung dargestellt und werden im folgenden näher beschrieben. Es zeigen:

Fig. 1 einen ausschnittsweisen Querschnitt einer Flüssigkristallzelle mit einem MIM-Element zur Verbindung einer Elektrode mit einem Leiter,

Fig. 2 eine ausschnittsweise Ansicht der Struktur auf einem Substrat der Flüssigkristallzelle nach Fig. 1,

Fig. 3 einen ausschnittsweisen Querschnitt einer Flüssigkristallzelle mit einem Feldeffekttransistor zur Verbindung einer Elektrode mit einer Leitung,

Fig. 4 eine ausschnittsweise Ansicht der Struktur auf einem Substrat der Flüssigkristallzelle nach Fig. 3 und

Fig. 5 eine Darstellung von Leitungen bei einer Abwandlung der Flüssigkristallzelle nach den Figuren 3 und 4.

Gleiche Teile sind in den Figuren mit gleichen Bezugszeichen versehen.

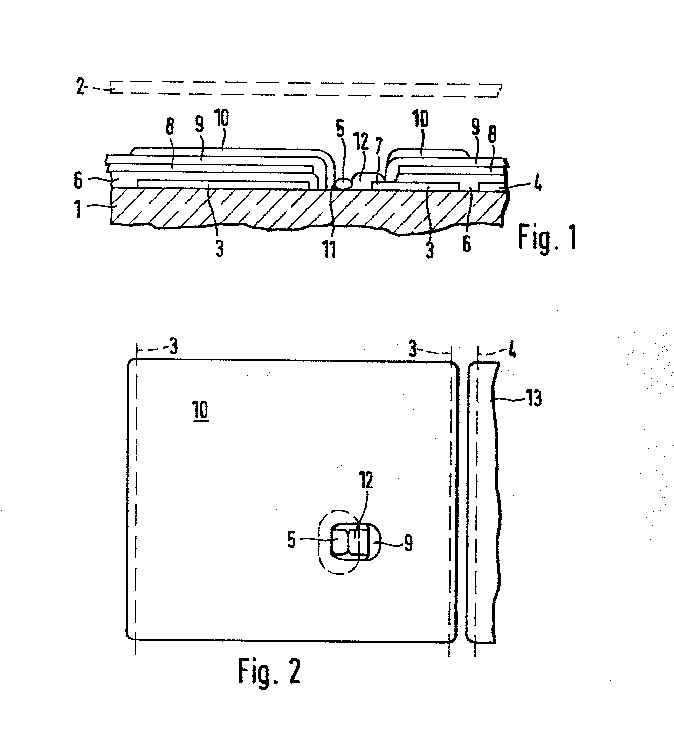

Die in Fig. 1 ausschnittsweise dargestellte Flüssigkristallzelle weist ein erstes Substrat 1 und ein zweites Substrat 2 auf. Das zweite Substrat 2 weist ähnliche Schichten wie das Substrat 1 auf und ist deshalb nur schematisch angedeutet. Es ist jedoch gegenüber dem Substrat 1 um 90 Grad in der Ebene des Substrats gedreht. Auf das Substrat 1 sind entsprechend der Anzahl der gewünschten Reihen von Bildelementen Leitungen aufgebracht, von denen in Fig. 1 lediglich die Leitung 3 und ein Teil einer benachbar-

...

ten Leitung 4 gezeigt ist. Sowohl die Leitung 3 als auch die darüber angeordneten Schichten sind im Bereich eines MIM-Elementes 5 unterbrochen.

Nachdem bei der Herstellung der Flüssigkristallzelle die Leitung 3 aufgebracht wurde, wird darüber eine Isolierschicht 6 gelegt, welche die Leitung 3 umschließt. Es bleibt lediglich bei 7 ein Stück der Leitung frei, um das MIM-Element 5 anschließen zu können. Auf die Isolierschicht 6 wird eine Abschirmschicht 8 aufgebracht, worauf wiederum eine Isolierschicht 9 folgt.

Das bei dem Ausführungsbeispiel nach Fig. 1 verwendete MIM-Element 5 besteht aus einer Tantalschicht, deren Oberfläche anodisiert ist. Bei der Aufbringung der Bildelektrode 10, welche die anodisierte Oberfläche der Tantalschicht bei 11 berührt, wird eine leitende Verbindung 12 zwischen dem Leiter 3 und einer anderen Oberfläche der Tantalschicht 5 geschaffen. Dadurch entsteht ein doppeltes MIM-Element, welches in an sich bekannter Weise zur Übertragung der Ladung von der Datenleitung zur Bildelektrode 10 dient

Bei einer Ausführungsform der Erfindung hat sich Indium-Zinn-Oxid in vorteilhafter Weise für die Leitungen, die Abschirmschichten und die Bildelektroden bewährt.

Die in Fig. 2 dargestellte ausschnittsweise Draufsicht der auf dem Substrat 1 der Flüssigkristallzelle nach Fig. 1 vorhandenen Struktur zeigt die Bildelektrode 10 sowie Teile der benachbarten Bildelektrode 13, das MIM-Element 5, die leitende Verbindung 12 und - gestrichelt - die Datenleitungen 3

...

0208078

und 4 sowie Teile der Isolierschicht 9.

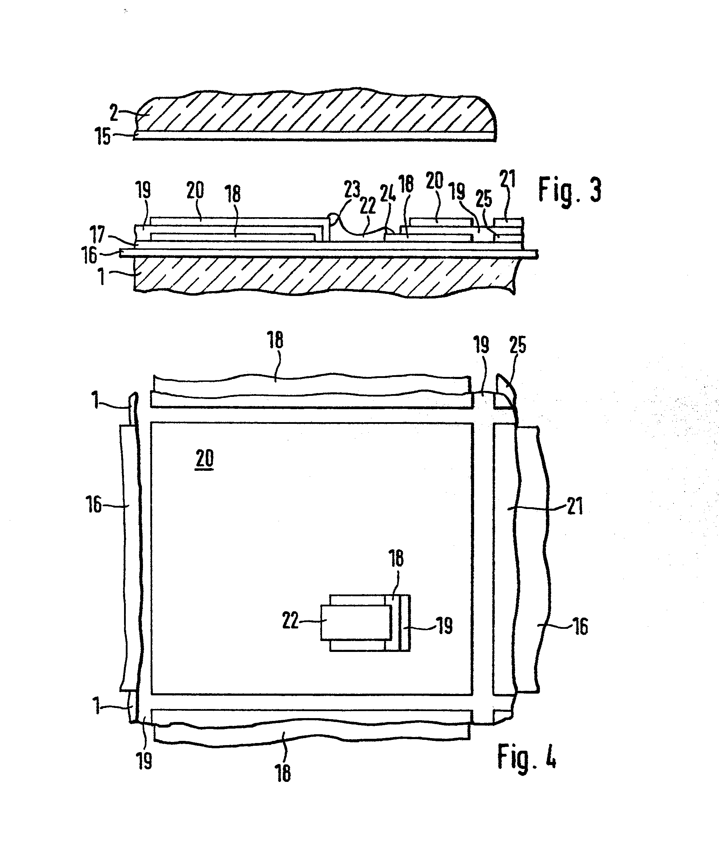

Bei der in Fig. 3 ausschnittweisen dargestellten Flüssigkristallzelle wird ein als Dünnfilmtransistor ausgebildeter Feldeffekttransistor als schaltbare Verbindung zwischen den Bildelementen und den Leitungen verwendet. Bei der Flüssigkristallzelle nach Fig. 3 ist die gesamte Koordinatenansteuerung auf das Substrat 1 aufgebracht, während auf dem Substrat 2 lediglich eine durchgehende gemeinsame Gegenelektrode 15 aufgebracht ist.

Auf dem Substrat 1 befindet sich zunächst eine durchsichtige leitende Schicht 16, welche eine parallel zur Zeichenebene verlaufende Leitung bildet. Darauf ist eine Isolierschicht 17 aufgebracht, welche die Leitung 16 und die parallel dazu verlaufenden Leitungen, welche nicht dargestellt sind, vollständig abdeckt, wobei jedoch für die Leitungen am Rand der Flüssigkristallzelle Kontaktierungsmöglichkeiten vorgesehen sind. Eine zweite Gruppe von Leitungen, welche senkrecht zur Zeichenebene verläuft, ist auf die Isolierschicht 17 aufgebracht. Von der zweiten Gruppe von Leitungen sind lediglich die Leitung 18 und teilweise eine weitere Leitung 25 dargestellt. Auf diese Leitungen ist wiederum eine Isolierschicht 19 aufgebracht, welche dann die Bildelektroden 20 und 21 trägt.

Die Leitung 18 und die Bildelektrode 20 weisen Aussparungen auf, welche für ein Halbleiterelement 22 vorgesehen sind. Das Halbleiterelement 22 ist bei 23 mit der Bildelektrode 20 und bei 24 mit der Leitung 18 kontaktiert. Zusammen mit einem Teil der Leitung 16 bildet es einen Feldeffekttransistor.

...

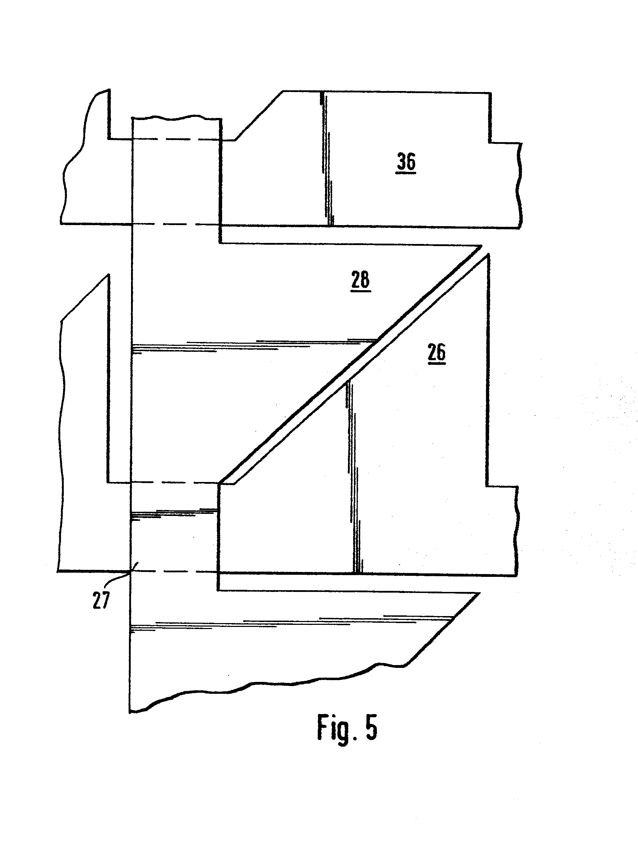

Fig. 4 zeigt eine Draufsicht auf die in Fig. 3 dargestellte Flüssigkristallzelle bei entferntem Substrat
2. Die ausschnittsweise Darstellung zeigt u. a. den
Verlauf der Leitungen 16, 18 und 25. Die Leitung 16,
welche in Zeilenrichtung verläuft, bildet gleichzeitig sämtliche Gate-Elektroden der Feldeffekttransistoren einer Zeile. Die Leitung 18 ist außer mit
dem Halbleiterelement 22 des dargestellten Bildelementes auch mit Halbleiterelementen der anderen Bildelemente der gleichen Spalte verbunden. Durch entsprechende Taktung der Leitungen wird zu jeweils
einem Zeitpunkt nur ein Feldeffekttransistor in den
leitenden Zustand gesteuert und somit Ladung auf die
Bildelektrode übertragen. Während der Ansteuerung
der anderen Bildelemente bleibt die Ladung auf der
Bildelektrode erhalten und steuert somit die Flüssigkristallsubstanz in den für die Darstellung des
Zeichens gewünschten Zustand.

Gemäß einer Weiterbildung der Erfindung können Teile
der auf einem Substrat aufgebrachten Struktur mit
einer als Abstandshalter dienenden isolierenden
Schicht versehen werden. Vorzugsweise wird diese
Schicht auf Teilen der Struktur aufgebracht, welche
ohnehin undurchsichtig, wie beispielsweise das Halbleiterelement 22, sind.

Die Leitungen 16, 17, 19 sind aus einem Material hergestellt, welches bei den geringen Schichtdicken
durchsichtig ist, beispielsweise Indium-Zinn-Oxid.
Bei der Flüssigkristallzelle nach den Figuren 3 und
4 sind außer der ebenfalls durchsichtigen Bildelektrode 20 noch die Leitungen 16 und 18 im optischen
Weg angeordnet. Eine Anordnung, bei welcher außer

...

- 8 -

0208078

der Bildelektrode lediglich eine weitere elektrisch leitfähige Schicht im optischen Weg vorhanden ist, zeigt Fig. 5. In Fig. 5 sind lediglich Leitungen dargestellt, während die übrigen Elemente im wesentlichen den in Fig. 3 und 4 gezeigten Elementen entsprechen. Die Leitungen 26 und 28 sind derart gestaltet, daß sie lediglich in einem kleinen Kreuzungsbereich 27 übereinanderliegen, während sie im optisch aktiven Bereich eines Bildelementes sich nicht überdecken. Im Bereich 27 kann vorzugsweise auch das Schaltelement und ggf. ein Abstandshalter angeordnet sein. Eine weitere, zur Leitung 26 parallel verlaufende Leitung 36 ist teilweise dargestellt.

Durch die in Fig. 5 gezeigte Form der Leitungen wird erreicht, daß der mittlere Querschnitt der Leitungen trotz starker Verringerung der Überdeckungsfläche 27 relativ groß ist, so daß der Widerstand der Leitungen den Anforderungen für die impulsförmige Ansteuerung genügt.

VDO Adolf Schindling AG        Gräfstraße 103
                               6000 Frankfurt/Main 90
                               G-R G 1062 / 1839
                               19. Juni 1985


Patentansprüche


1. Flüssigkristallzelle mit zwei im Abstand zueinander angeordneten Substraten, die zwischen sich einen mit Flüssigkristallsubstanz gefüllten Zellenraum bilden, mit zellenraumseitig auf mindestens einem Substrat aufgebrachten Leitungen, Elektroden und anderen Elementen, dadurch gekennzeichnet, daß die Leitungen (3, 4, 16, 18, 26, 28) und Elektroden (10, 20) als übereinanderliegende, voneinander isolierte Schichten aufgebracht sind.

2. Flüssigkristallzelle nach Anspruch 1, dadurch gekennzeichnet, daß die Leitungen (3, 4, 16, 18, 26, 28) durchsichtig sind.

3. Flüssigkristallzelle nach Anspruch 2, dadurch gekennzeichnet, daß die Leitungen (3, 4, 16, 18, 26, 28) und/oder Elektroden (10, 20) aus Indium-Zinn-Oxid bestehen.

...

0208078

4. Flüssigkristallzelle nach Anspruch 1, dadurch gekennzeichnet, daß die Leitungen (3, 4, 16, 18) im wesentlichen die Flächen der ihnen zugeordneten Bildelektroden (10, 20) überdecken.

5. Flüssigkristallzelle nach Anspruch 1, dadurch gekennzeichnet, daß die Leitungen (26, 28) eine kleinere Fläche als die Elektroden (20) einnehmen.

6. Flüssigkristallzelle nach Anspruch 1, dadurch gekennzeichnet, daß zwischen den Elektroden (10) und den Leitungen (3) eine leitende Abschirmschicht (8) und eine weitere Isolierschicht (9) angeordnet ist.

7. Flüssigkristallzelle nach Anspruch 1, dadurch gekennzeichnet, daß zur Verbindung der Leitungen (3) mit den Elektroden (10) Metall-Isolator-Metall-Elemente (MIM-Elemente) (5) vorgesehen sind, daß auf beiden Substraten nebeneinander liegende Leitungen (3, 4), darüber eine Isolierschicht (6) und darüber Elektroden (10) aufgebracht sind, daß die MIM-Elemente (5) in Aussparungen der Elektroden (10) und der Leitungen (3) angeordnet sind und daß die Leitungen (3) auf dem einen Substrat (1) senkrecht zu den Leitungen auf dem anderen Substrat (2) verlaufen.

8. Flüssigkristallzelle nach Anspruch 7, dadurch gekennzeichne,, daß die Elektroden (10), die Leitungen (3) und die Isolierschicht (6) sich derart überlappen, daß jeweils eine Elektrode (10) mit dem einen Anschluß (11) eines MIM-Elementes (5) und die zugehörige Leitung (3) mit dem anderen Anschluß des MIM-Elementes (12) in leitender Verbindung stehen.

...

9. Flüssigkristallzelle nach Anspruch 1, dadurch gekennzeichnet, daß zur Verbindung der Leitungen (16, 18) mit den Elektroden (20) Transistoren (22), insbesondere als Dünnfilmtransistoren ausgebildete Feldeffekttransistoren, vorgesehen sind, daß auf einem Substrat (1) übereinander liegend zwei sich kreuzende Gruppen von untereinander paralleler Leitungen (16, 18) und Elektroden (20) vorgesehen sind, daß jeweils die erste Gruppe der Leitungen (16), die zweite Gruppe der Leitungen (18) und die Elektroden (20) durch Isolierschichten (17, 18) voneinander getrennt sind und daß auf dem anderen Substrat (2) eine gemeinsame Elektrode (15) aufgebracht ist.

10. Flüssigkristallzelle nach Anspruch 9, dadurch gekennzeichnet, daß die Transistoren (22) in Aussparungen der Elektroden (20) und der Leitungen (18) der zweiten Gruppe angeordnet sind.

11. Flüssigkristallzelle nach Anspruch 9, dadurch gekennzeichnet, daß die Elektroden (20), die Leitungen (16, 18) und die Isolierschichten (17, 19) sich derart überlappen, daß jeweils eine Elektrode (20) mit einem ersten Anschluß (23) eines Transistors und die zugehörige Leitung (18) der zweiten Gruppe mit einem zweiten Anschluß (24) des Transistors (22) verbunden ist, und daß jeweils eine Leitung (16) der ersten Gruppe einen dritten Anschluß des Transistors (22) bildet.

12. Flüssigkristallzelle nach Anspruch 9, dadurch gekennzeichnet, daß die Leitungen (26, 28) eine kleinere Fläche als die Elektroden (20) überdecken und daß die Leitungen der zweiten Gruppe abschnittsweise in einer Ebene mit den Leitungen der ersten

...

- 4 -

0208078

Gruppe angeordnet sind.

13. Flüssigkristallzelle nach Anspruch 12, dadurch gekennzeichnet, daß die Leitungen (26, 28) jeweils pro Elektrode einen schmalen Bereich (27) und einen Bereich mit in Längsrichtung der Leitungen ansteigender Breite aufweisen.

0208078

Fig. 1

Fig. 2

0208078

**Fig. 3**

**Fig. 4**

Fig. 5

Europäisches
Patentamt

**EUROPÄISCHER RECHERCHENBERICHT**

## EINSCHLÄGIGE DOKUMENTE

EP 86106038.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 509 828 (CLERC)<br>* Fig.; Spalte 3, Zeile 12 - Spalte 4, Zeile 39 *<br>-- | 1 | G 02 F 1/133<br>G 09 F 9/35 |
| X | EP - A1 - 0 073 705 (THOMSON)<br>* Fig.3-5; Seite 7, Zeile 18 - Seite 8, Zeile 31 * | 1,4 | |
| A | -- | 2,3 | |
| X | US - A - 4 477 805 (ARTON)<br>* Fig.1 * | 1 | |
| A | -- | 9 | |
| A | US - A - 4 431 271 (OKUBO)<br>* Fig.5,6,8-10; Spalte 2, Zeile 62 - Spalte 3, Zeile 9 *<br>-- | 1,2,4,<br>9,11,12 | |
| A | EP - A2 - 0 102 452 (VDO)<br>* Seite 2, Zeile 17 - Seite 4, Zeile 2; Fig.1-3 *<br>---- | 1,2,3,<br>5,7 | |

**RECHERCHIERTE SACHGEBIETE (Int. Cl.4)**

G 02 F 1/00
G 09 F 9/00
G 09 G 3/00

Der vorliegende Recherchenbericht wurde für alle Patentansprüche erstellt.

| Recherchenort | Abschlußdatum der Recherche | Prüfer |
|---|---|---|
| WIEN | 16-10-1986 | GRONAU |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82